# EUROPEAN PATENT APPLICATION

(11) **EP 4 722 768 A1**
(43) Date of publication of application: **08.04.2026**
(21) Application number: 24810988.6
(22) Date of filing: 14.05.2024
(51) Int. Cl.: G02B 3/08, F21V 5/00, F21V 5/04, F21V 13/02, G01S 7/481, G02B 13/00, F21Y 103/10, F21Y 115/10, F21Y 115/30, F21S 41/25, F21S 41/143, F21S 41/29, G01S 17/931, G02B 1/00

(54) **LENS UNIT, LAMP, AND LIDAR DEVICE**

(30) Priority: 25.05.2023 JP 2023086496
(71) Applicant: Koito Manufacturing Co., Ltd., Shinagawa-ku, Tokyo 141-0001 (JP)
(72) Inventor: MOTOHASHI, Kazuya, Shizuoka-shi, Shizuoka 424-8764 (JP)
(74) Representative: Hoffmann Eitle
(86) International application number: PCT/JP2024/017847
(87) International publication number: WO 2024/241981

(57) **Abstract**

A lens unit (30) includes: a first meta-lens (31) that has a first entering surface (31a) through which light enters, and a first emission surface (31b) through which the light that has entered the first entering surface (31a) is emitted, and includes a plurality of first nanostructures (311) provided on the side of the first emission surface (31b), the first nanostructures (311) being configured to modulate the phase of the light; and a second meta-lens (32) that has a second entering surface (32a) that faces the first emission surface (31b) and through which the light emitted from the first emission surface (31b) enters, and a second emission surface (32b) through which the light that has entered the second entering surface (32a) is emitted, and includes a plurality of second nanostructures (321) provided on the side of the second entering surface (32a), the second nanostructures (321) being configured to modulate the phase of the light.

## Description

### Technical Field

The present invention relates to a lens unit, a lamp, and a LiDAR device.

### Background Art

As vehicle headlights such as headlights for automobiles, lamps in which light emitted from a light source enters a projection lens are known. Patent Literature 1 mentioned below discloses such a vehicle headlight.

A convex lens is used as the projection lens of the vehicle headlight of Patent Literature 1 mentioned below. Accordingly, light from the light source is emitted in a state where the divergence angle is narrowed by the projection lens.

[Patent Literature 1] WO 2021/172169 A1

### Summary of Invention

Along with a demand for smaller vehicle headlights, there is a demand for the use of meta-lenses, instead of projection lenses.

A meta-lens includes a plurality of nanostructures that modulate the phase of light, and dirt such as dust easily adheres to fine irregularities of the nanostructures. Also, there is a risk of damaging the nanostructures, and therefore, it is not possible to wipe dirt off the nanostructures in some cases. If dirt such as dust penetrates into the irregularities of the nanostructures, the functions of the meta-lens might be degraded.

Therefore, the present invention aims to provide a lens unit, a lamp, and a LiDAR device that can prevent degradation of the functions of meta-lenses.

To achieve the above objective, a lens unit according to the present invention characteristically includes: a first meta-lens that has a first entering surface through which light enters, and a first emission surface through which the light that has entered the first entering surface is emitted, and includes a plurality of first nanostructures provided on the first emission surface side, the first nanostructures being configured to modulate a phase of the light; and a second meta-lens that has a second entering surface that faces the first emission surface and through which the light emitted from the first emission surface enters, and a second emission surface through which the light that has entered the second entering surface is emitted, and includes a plurality of second nanostructures provided on the second entering surface side, the second nanostructures being configured to modulate the phase of the light.

The lens unit modulates the phase of the entering light using the first meta-lens and second meta-lens, so that the amount of change in the phase of the light can be made larger than that in a case where the number of meta-lenses is one. Further, in the lens unit, the first nanostructures of the first meta-lens and the second nanostructures of the second meta-lens are disposed to face each other. That is, the first nanostructures and the second nanostructures are disposed to face inward. Therefore, the lens unit can prevent contact of dirt such as dust from the outside with the first nanostructures and the second nanostructures more effectively than in a case where the first nanostructures and the second nanostructures face outward. Accordingly, the lens unit can prevent adhesion of dirt to the first nanostructures and the second nanostructures. Thus, the lens unit can prevent degradation of the functions.

Also, the lens unit preferably includes a cover unit that surrounds at least part of the space formed between the first meta-lens and the second meta-lens.

With such a configuration, at least part of the boundary between the space with which the first nanostructures and the second nanostructures are in contact and the external space can be blocked. Thus, the lens unit can more effectively prevent adhesion of dirt from the external space to the first nanostructures and the second nanostructures.

Further, in the lens unit, each distance between the first nanostructures and the second nanostructures facing each other is preferably at least twice a wavelength of the light.

Further, the lens unit may include a third meta-lens that is disposed between the first meta-lens and the second meta-lens, has a third entering surface that faces the first emission surface and through which the light entering from the first emission surface enters, and a third emission surface through which the light having entered the third entering surface is emitted, and includes a plurality of third nanostructures provided on at least one of the third entering surface side or the third emission surface side, the third nanostructures being configured to modulate the phase of the light. In the lens unit, the light emitted from the first emission surface may enter the second entering surface via the third meta-lens.

In such a configuration, as the light passes through the third meta-lens, the lens unit can increase the amount of change in the phase of the entering light. Also, in the lens unit, as the third meta-lens is disposed between the first meta-lens and the second meta-lens, it is possible to prevent adhesion of dirt to the nanostructures of the third meta-lens.

Further, a lamp according to the present invention characteristically includes: the lens unit according to any one of the above; and a light source that emits the light. The lamp can emit light modulated by the first nanostructures and the second nanostructures. Also, the lamp can prevent adhesion of dirt to the first structures and the second structures using the lens unit, and prevent degradation of the functions of the meta-lenses.

Further, the lamp may include a housing that has an outer cover that transmits the light, and surrounds the light source, in which the lens unit may be at least part of the outer cover.

In the lamp with such a configuration, the meta-lenses can be disposed in the outermost layer of the lamp. Accordingly, there is no need to provide the meta-lenses inside the housing, and it is possible to increase the degree of freedom in design so that the lamp can be made smaller in size. Furthermore, even if the meta-lenses are disposed in the outermost layer of the lamp, the first nanostructures and the second nanostructures are not exposed to the outside, and thus, it is possible to prevent adhesion of dirt to the first nanostructures and the second nanostructures, and prevent degradation of the functions of the meta-lenses. Accordingly, with this lamp, it is possible to prevent a change in the light distribution pattern of the emitted light due to functional degradation of the meta-lenses.

Further, a LiDAR device according to the present invention may include: a light source that emits light to an object; the lens unit according to any one of the above; and a sensor that receives reflected light of the light reflected by the object, in which the lens unit modulates a phase of at least one of the light or the reflected light.

With such a configuration, the LiDAR device can modulate the light or the reflected light with the first nanostructures and the second nanostructures. Also, the LiDAR device can prevent adhesion of dirt to the first structures and the second structures using the lens unit, and prevent degradation of the functions of the meta-lenses. Thus, with the LiDAR device, it is possible to prevent degradation of object detection performance.

As described above, according to the present invention, a lens unit, a lamp, and a LiDAR device that can prevent degradation of the functions of meta-lenses are provided.

### Brief Description of Drawings

[FIG. 1] FIG. 1 is a cross-sectional diagram schematically illustrating a vehicle headlight according to a first embodiment of the present invention.
[FIG. 2] FIG. 2 is a cross-sectional diagram schematically illustrating the lens unit illustrated in FIG. 1.
[FIG. 3] FIG. 3 is an enlarged cross-sectional diagram illustrating part of the lens unit illustrated in FIG. 1.
[FIG. 4] FIG. 4 is a cross-sectional diagram schematically illustrating a vehicle headlight according to a second embodiment of the present invention.
[FIG. 5] FIG. 5 is an enlarged cross-sectional diagram illustrating part of the outer cover illustrated in FIG. 4.
[FIG. 6] FIG. 6 is a conceptual diagram schematically illustrating a LiDAR device according to a third embodiment of the present invention.
[FIG. 7] FIG. 7 is a cross-sectional diagram illustrating a first modification of a lens unit according to an embodiment of the present invention.
[FIG. 8] FIG. 8 is a cross-sectional diagram illustrating a second modification of a lens unit according to an embodiment of the present invention.
[FIG. 9] FIG. 9 is a cross-sectional diagram illustrating a third modification of a lens unit according to an embodiment of the present invention.

### Description of Embodiments

The following is a detailed description of preferred embodiments of the present invention, with reference to the drawings. The embodiments described below are intended to facilitate understanding of the present invention, and are not intended to limit the present invention. The present invention can be changed or modified within the scope of the claims, without departing from the gist thereof. Note that, in the drawings referred to in the description below, dimensions of the respective members might be varied for easier understanding.

### (First Embodiment)

A lamp according to a first embodiment is a vehicle headlight, and emits light in a state of being attached to a vehicle.

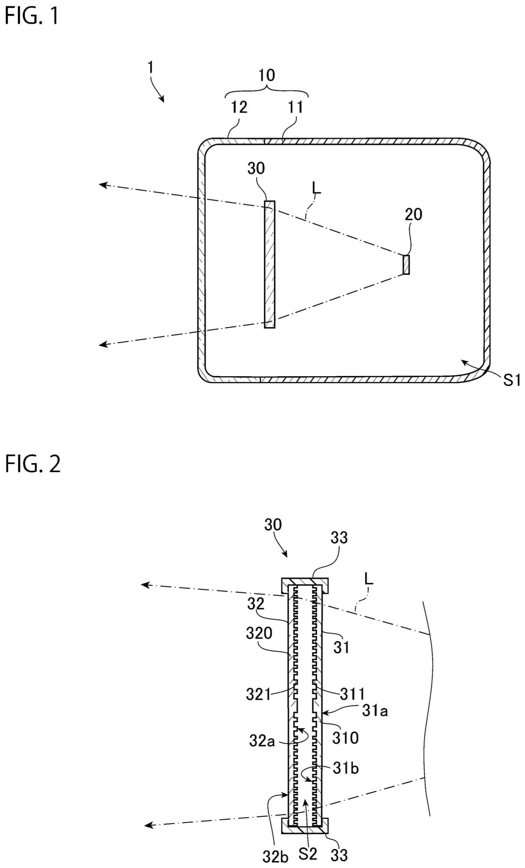

FIG. 1 is a diagram illustrating a vehicle headlight 1 according to an embodiment of the present invention. FIG. 1 is a diagram schematically illustrating a vertical cross-section of the vehicle headlight 1. Here, the direction in which light L travels is the forward direction, and the direction opposed to the direction in which the light L travels is the rearward direction. As illustrated in FIG. 1, the vehicle headlight 1 according to the present embodiment includes a housing 10, a light source 20, and a lens unit 30 as principal components.

The housing 10 forms the exterior of the vehicle headlight 1. The housing 10 includes an external housing 11 and an outer cover 12 as principal components. The external housing 11 is formed in a bowl-like shape, and is open on the front side. The outer cover 12 is fixed to the external housing 11 so as to close the opening.

The outer cover 12 is formed in a bowl-like shape, and is open on the rear side. The opening of the outer cover 12 has substantially the same shape as that of the opening of the external housing 11. The outer cover 12 transmits the light L from the light source 20. For example, the outer cover 12 is formed with plastic, glass, or the like through which the light L passes.

A space S1 is formed by the external housing 11 and the outer cover 12. The light source 20 and the lens unit 30 are accommodated in the space S1. That is, the housing 10 surrounds the light source 20 and the lens unit 30. The light source 20, the lens unit 30, and the outer cover 12 are arranged side by side in the front-rear direction in the space S1. The light source 20, the lens unit 30, and the outer cover 12 are disposed in this order toward the front side.

The light source 20 emits the light L toward the lens unit 30. For example, the light source 20 includes a plurality of light emitting elements that emit the light L, and a circuit board on which the plurality of light emitting elements is mounted. The light emitting elements are arranged in a matrix fashion, have emission surfaces for the light L positioned on substantially the same plane, and emit the light L forward.

Light emitted from each light emitting point of each light emitting element is a spherical wave, and has a predetermined divergence angle. Accordingly, the light L emitted from each light emitting element propagates forward while spreading at the predetermined divergence angle. The amount of the light L to be emitted from the plurality of light emitting elements can be changed element by element. In the present embodiment, the light emitting elements are light emitting diodes (LEDs) that emit white light, and the light source 20 is a so-called LED array. Note that the number and configuration of the light emitting elements are not limited to any particular ones. For example, the light emitting elements may include a plurality of LEDs that emit light having different wavelengths from each other, or may include a plurality of laser diodes (LDs) that emit light having different wavelengths from each other and phosphors disposed on the LDs. Alternatively, the light source 20 may be formed with one light emitting element.

The light source 20 including a plurality of light emitting elements may be capable of emitting the light L having a predetermined light distribution pattern by selecting the light emitting elements to emit the light L, and may be capable of changing the light distribution pattern by changing the selection. Also, the light source 20 may be capable of adjusting the intensity distribution of the light L in the light distribution pattern by adjusting the amount of light to be emitted from each light emitting element. Note that, even in a case where the light source 20 includes a plurality of light emitting elements, the light source 20 is not necessarily capable of changing the light distribution pattern of the light L.

The lens unit 30 functions as a projection lens that narrows the divergence angle of the light L from the light source 20. The lens unit 30 modulates the phase of the light L from the light source 20. The lens unit 30 modulates the phase of the light L so as to narrow the divergence angle of the light L from the light source 20.

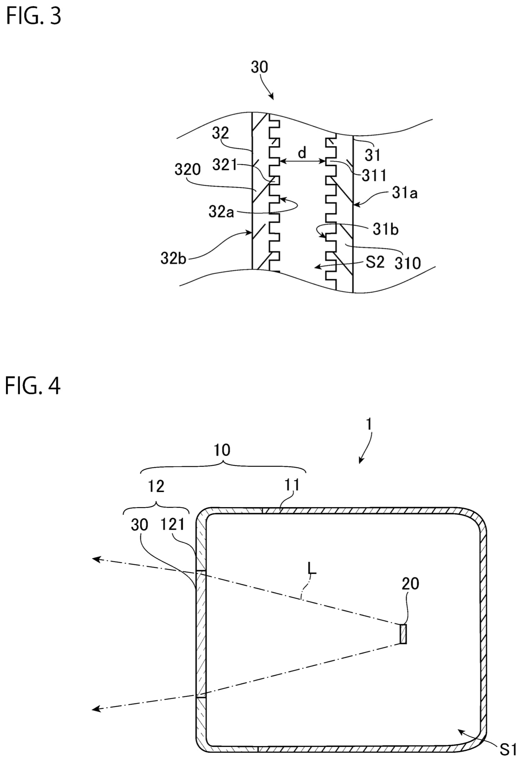

FIG. 2 is a cross-sectional diagram schematically illustrating the lens unit 30 illustrated in FIG. 1. Like FIG. 1, FIG. 2 is a diagram schematically illustrating a vertical cross-section. As illustrated in FIG. 2, the lens unit 30 includes a first meta-lens 31, a second meta-lens 32, and a cover unit 33 as principal components. Further, FIG. 3 is a partially enlarged view of the first meta-lens 31 and the second meta-lens 32.

The first meta-lens 31 transmits the light L from the light source 20, and modulates the phase of the light L. Here, the first meta-lens 31 is designed to narrow the divergence angle of the light L from the light source 20. Also, the first meta-lens 31 includes a first entering surface 31a through which the light L from the light source 20 enters. The first entering surface 31a faces rearward. Further, the first meta-lens 31 includes a first emission surface 31b through which the light L having entered the first entering surface 31a is emitted. The first emission surface 31b faces forward. Further, the first meta-lens 31 includes a substrate 310.

The substrate 310 is a circular member having a predetermined thickness, for example. The substrate 310 is formed in a planar shape. Also, the substrate 310 transmits the light L. For example, the material of the substrate 310 is glass, resin, or the like.

A plurality of first nanostructures 311 that modulate the phase of the light L is provided on the first emission surface 31b side of the substrate 310. Here, for the sake of visual clarity, only one first nanostructure 311 is denoted by the reference sign, and the reference signs for the other first nanostructures 311 are omitted. In the first meta-lens 31 of the present embodiment, the first nanostructures 311 are arranged over an entire surface of the substrate 310.

The first nanostructures 311 extend forward, for example. In the present embodiment, the shape of each first nanostructure 311 is a cylindrical shape, for example, and the diameter is smaller than the longest wavelength of the light L to be emitted from the light source 20. Note that the width of each first nanostructure 311 is only required to be smaller than the longest wavelength of the light L to be emitted from the light source 20, and the shape of each first nanostructure 311 is not limited to any particular shape. For example, the shape of each first nanostructure 311 may be a prismatic shape or a frustum shape. Further, each first nanostructure 311 may be formed with a pair of quadrangular prisms or the like arranged at a predetermined interval. Alternatively, the respective first nanostructures 311 may have different shapes from each other. Examples of the material forming the first nanostructures 311 include glass and resin. Note that the materials forming the first nanostructures 311 and the substrate 310 may be the same, or may be different.

The second meta-lens 32 is disposed in front of the first meta-lens 31 in the lens unit 30. The second meta-lens 32 is disposed at a predetermined distance from the first meta-lens 31. The second meta-lens 32 modulates the phase of the light L from the first meta-lens 31. Here, the second meta-lens 32 is designed to narrow the divergence angle of the light L from the first meta-lens 31.

Also, the second meta-lens 32 includes a second entering surface 32a through which the light L emitted from the first emission surface 31b enters. The second entering surface 32a faces the first emission surface 31b. Further, the second meta-lens 32 includes a second emission surface 32b through which the light L having entered the second entering surface 32a is emitted. The second emission surface 32b faces forward.

The second meta-lens 32 includes a substrate 320. The description of the substrate 320 is the same as the description of the substrate 310, and therefore, the description thereof is not made herein.

A plurality of second nanostructures 321 that modulate the phase of the light L is provided on the second entering surface 32a side of the substrate 320. Here, for the sake of visual clarity, only one second nanostructure 321 is denoted by the reference sign, and the reference signs for the other second nanostructures 321 are omitted. In the second meta-lens 32 of the present embodiment, the second nanostructures 321 are arranged over an entire surface of the substrate 320.

The second nanostructures 321 extend rearward, for example. The description of the other aspects of the second nanostructures 321 is the same as the description of those of the first nanostructures 311, and therefore, is omitted herein. Further, the second nanostructures 321 may be the same in material or shape as the first nanostructures 311, or may be different.

The second meta-lens 32 includes the second entering surface 32a through which the light L from the first meta-lens 31 enters. The second entering surface 32a faces rearward. That is, the second entering surface 32a faces the first emission surface 31b. The second emission surface 32b is the surface on the rear side of the substrate 320, and includes the portion at which the second nanostructures 321 are not disposed, and the surfaces of the second nanostructures 321. Further, the second meta-lens 32 includes the second emission surface 32b through which the light L is emitted. The second emission surface 32b faces forward.

A space S2 is formed between the first meta-lens 31 and the second meta-lens 32. In the space S2, the plurality of first nanostructures 311 and the plurality of second nanostructures 321 are disposed to face each other.

The cover unit 33 surrounds at least part of the space S2. For example, the cover unit 33 is a ring-like member extending from the outer periphery of the first meta-lens 31 toward the outer periphery of the second meta-lens 32. In this case, the cover unit 33 seals the space S2. For example, the cover unit 33 is formed with rubber, resin, plastic, or the like.

Further, in any combination of a first nanostructure 311 and a second nanostructure 321 facing each other, the first nanostructure 311 and the second nanostructure 321 are separated by a distance d or longer. In the present embodiment, the distance d is at least twice the longest wavelength of the light L to be emitted from the light source 20. That is, the distance between the first nanostructure 311 and the second nanostructure 321 facing each other is at least twice the longest wavelength of the light L.

Note that the cover unit 33 may be a C-shaped member extending from part of the outer periphery of the first meta-lens 31 toward a portion of the outer periphery of the second meta-lens 32, the portion facing the part. Further, the lens unit 30 does not necessarily include the cover unit 33. Furthermore, the space S2 may be filled with a predetermined member that transmits the light L and has a different refractive index from the refractive index of the first nanostructures 311 and the second nanostructures 321. For example, the space S2 may be filled with resin or the like through which the light L passes.

Next, operations of the vehicle headlight 1 are described. The light source 20 emits the light L by electric power or the like supplied from the outside. The light L emitted from the light source 20 enters the first entering surface 31a of the first meta-lens 31, while maintaining a predetermined divergence angle. The light M that has entered the first entering surface 31a is modulated by the plurality of first nanostructures 311 so that the divergence angle becomes smaller. The light L modulated by the plurality of first nanostructures 311 is emitted from the first emission surface 31b, and enters the second entering surface 32a of the second meta-lens 32.

The light M that has entered the second entering surface 32a is modulated by the plurality of second nanostructures 321 so that the divergence angle becomes smaller. The light L modulated by the plurality of second nanostructures 321 is emitted from the second emission surface 32b. The light L emitted from the second emission surface 32b passes through the outer cover 12 and is emitted to the outside.

The vehicle headlight 1 having the above configuration emits the light L from the light source 20 to the outside through the lens unit 30. Thus, the vehicle headlight 1 can increase the amount of change in the phase of the light L by modulating the light L with the first meta-lens 31 and the second meta-lens 32.

Further, in the lens unit 30, the cover unit 33 covers at least part of the space S2 formed by the first meta-lens 31 and the second meta-lens 32. Furthermore, the first nanostructures 311 of the first meta-lens 31 and the second nanostructures 321 of the second meta-lens 32 are disposed inside the space S2. Accordingly, in the lens unit 30, the cover unit 33 can prevent contact of dirt such as dust from the outside with the first nanostructures 311 and the second nanostructures 321. Thus, the lens unit 30 can prevent adhesion of dirt to the first nanostructures 311 and the second nanostructures 321, and prevent degradation of the functions of the first meta-lens 31 and the second meta-lens 32.

Note that the vehicle headlight 1 may further include a lens such as a convex lens. For example, the vehicle headlight 1 may include a primary lens between the light source 20 and the lens unit 30. Alternatively, the vehicle headlight 1 may include a lens between the lens unit 30 and the outer cover 12. Further, the vehicle headlight 1 may include a plurality of lens units 30.

### (Second Embodiment)

Next, a second embodiment of the present invention is described in detail. Note that the components that are same as or equivalent to those of the first embodiment are denoted by the same reference signs as those used in the first embodiment, and explanation thereof is not repeated herein unless otherwise specified. The present embodiment differs from the first embodiment in that the lens unit 30 is formed as at least part of the outer cover 12.

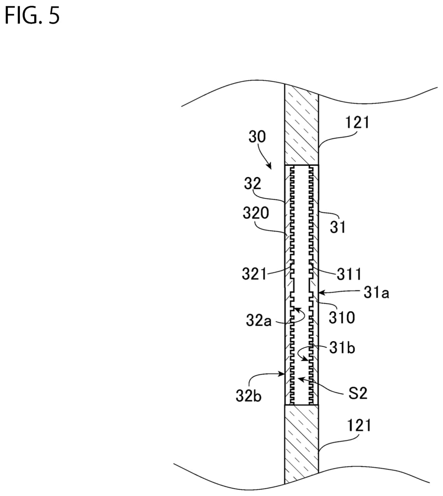

FIG. 4 is a diagram illustrating a vehicle headlight 1 according to an embodiment of the present invention. FIG. 4 is a diagram schematically illustrating a vertical cross-section of the vehicle headlight 1. FIG. 5 is an enlarged cross-sectional view of part of the outer cover 12 according to the present embodiment. As illustrated in FIG. 4, the vehicle headlight 1 according to the present embodiment includes a housing 10 and a light source 20 as principal components. Only the different aspects from the first embodiment are described herein.

The outer cover 12 includes a lens unit 30 and a cover member 121 as principal components.

The cover member 121 is formed in a bowl-like shape, and is open on the rear side. The rear-side opening of the cover member 121 has substantially the same shape as that of the opening of an external housing 11. Further, the front side of the cover member 121 is open. The front-side opening of the cover member 121 is formed at the central portion of the outer cover 12 when the outer cover 12 is viewed from the front. The cover member 121 may or may not transmit light L.

The lens unit 30 is fixed to the front-side opening of the cover member 121 so as to close the opening. The lens unit 30 is designed as at least part of the outer cover 12. The lens unit 30 is disposed so as to overlap at least part of the region to be illuminated by the light L from the light source 20.

As illustrated in FIG. 5, the lens unit 30 according to the present embodiment does not include the cover unit 33. In the example illustrated in FIG. 5, however, the outer periphery of a first meta-lens 31 and the outer periphery of a second meta-lens 32 are fixed in contact with the cover member 121 in the present embodiment. That is, the cover member 121 surrounds a space S2 formed between the first meta-lens 31 and the second meta-lens 32. Accordingly, the cover member 121 also serves as the cover unit that surrounds the space S2.

Next, operations of the vehicle headlight 1 are described. The light source 20 emits the light L by electric power supplied from the outside. The light L emitted from the light source 20 enters the first entering surface 31a of the first meta-lens 31, while maintaining a predetermined divergence angle. The light L that has entered the first entering surface 31a is modulated by a plurality of first nanostructures 311 so that the divergence angle becomes smaller. The light L modulated by the plurality of first nanostructures 311 is emitted from the first emission surface 31b, and enters the second entering surface 32a of the second meta-lens 32. The light L that has entered the second entering surface 32a is modulated by a plurality of second nanostructures 321 so that the divergence angle becomes smaller. The light L modulated by the plurality of second nanostructures 321 is emitted to the outside.

As described above, the vehicle headlight 1 of the present embodiment includes the lens unit 30 as part of the outer cover 12. Accordingly, the lens unit 30 is used as a member of the outermost layer of a lamp. Thus, the lens unit 30 can contain some other member therein, or the external housing 11 can be made smaller in size, so that the degree of freedom in design can be increased.

Further, even if the lens unit 30 is installed in the outermost layer, the first nanostructures 311 and the second nanostructures 321 are not exposed to the outside, and thus, the lens unit 30 can prevent adhesion of dirt to the first nanostructures 311 and the second nanostructures 321. As a result, the lens unit 30 can prevent degradation of the functions of the first meta-lens 31 and the second meta-lens 32.

Note that the vehicle headlight 1 may include a primary lens between the light source 20 and the lens unit 30. Furthermore, the lens unit 30 may be fixed to the opening of the external housing 11.

### (Third Embodiment)

Next, a third embodiment of the present invention is described in detail. Note that the components that are same as or equivalent to those of the first embodiment are denoted by the same reference signs as those used in the first embodiment, and explanation thereof is not repeated herein unless otherwise specified. The present embodiment differs from the first embodiment in that a lens unit 30 is used in a light detection and ranging (LiDAR) device.

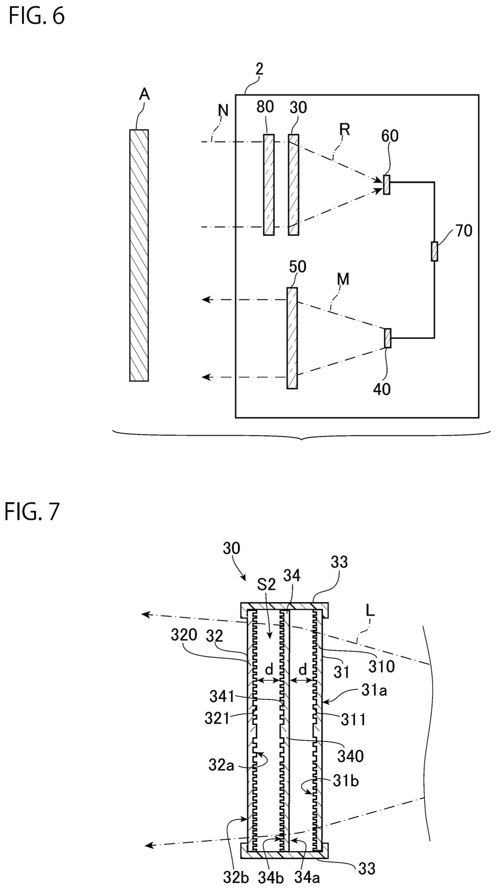

FIG. 6 is a diagram schematically illustrating an example configuration of a LiDAR device 2 according to the present embodiment. Here, the direction from the LiDAR device 2 toward an object A is defined as the forward direction, and the direction opposed to the forward direction is defined as the rearward direction. The LiDAR device 2 measures a distance between each point of the object A and the LiDAR device 2. The LiDAR device 2 emits light toward the object A, receives reflected light from the object A, and measures the distance between each point of the object A and the LiDAR device 2 on the basis of the time from the emission of the light till the reception of the reflected light.

As illustrated in FIG. 6, the LiDAR device 2 includes a lens unit 30, a light source 40, a lens unit 50, a sensor 60, a control device 70, and a bandpass filter 80 as principal components. The light source 40 and the lens unit 50 are disposed in this order toward the front side. Also, the sensor 60, the lens unit 30, and the bandpass filter 80 are disposed in this order toward the front side. The control device 70 is communicably connected to the light source 40 and the sensor 60 via signal lines or the like.

The light source 40 emits light M toward the lens unit 50, in accordance with a control signal from the control device 70. The light source 40 emits laser light having a predetermined divergence angle as the light M. The light source 40 emits flash as the light M. For example, the light source 40 has a configuration including an LD that emits the light M. Alternatively, the light source 40 may include a vertical cavity surface emitting laser (VCSEL) or the like that performs surface emission.

The lens unit 50 is disposed in front of the light source 40. The lens unit 50 modulates the phase of the light M from the light source 40 so as to narrow the divergence angle of the light M from the light source 40. Here, the lens unit 50 modulates the phase of the light M so that the light M turns into parallel light. The configuration of the lens unit 50 is substantially the same as the configuration of the lens unit 30 according to the first embodiment, and therefore, explanation of the lens unit 50 is not made herein. Note that first nanostructures 311 and second nanostructures 321 included in the lens unit 50 may be the same as or differ from the first nanostructures 311 and the second nanostructures 321 according to the first embodiment.

Light N from the object A enters the bandpass filter 80. The light N includes reflected light R obtained by the object A reflecting the light M, reflected light obtained by the object A reflecting ambient light such as sunlight, and light emitted by the object A. The bandpass filter 80 transmits light having wavelengths in a predetermined range including the wavelength of the light M, and blocks the other light, to extract the reflected light R from the light N from the object A. The bandpass filter 80 includes a dielectric multilayer film, for example.

The lens unit 30 modulates the phase of the reflected light R so as to condense the reflected light R from the bandpass filter 80 onto the sensor 60. Note that first nanostructures 311 and second nanostructures 321 included in the lens unit 30 may be the same as or differ from the first nanostructures 311 and the second nanostructures 321 according to the first embodiment, or the first nanostructures 311 and the second nanostructures 321 of the lens unit 50.

The sensor 60 converts the reflected light R condensed by the lens unit 30 into an electrical signal as an image having a predetermined resolution. That is, the sensor 60 converts the reflected light R from the lens unit 30 into an electrical signal at a plurality of elements corresponding to the predetermined resolution. The sensor 60 transmits the electrical signal converted from the reflected light R to the control device 70 via a signal line or the like. For example, the sensor 60 includes a charge coupled device (CCD), a complementary metal-oxide-semiconductor (CMOS), an avalanche photodiode (APD), a single photon avalanche diode (SPAD), or the like.

As the control device 70, an integrated circuit such as a microcontroller, an integrated circuit (IC), a large-scale integrated circuit (LSI), or an application specific integrated circuit (ASIC), a numerical control (NC) device, or the like can be used, for example. The control device 70 operates by executing a program, for example.

Next, operations of the LiDAR device 2 are described. The control device 70 transmits a control signal to the light source 40 to cause the light source 40 to emit the light M, in accordance with an operation from a user or the like. The light source 40 emits the light M, in accordance with the control signal from the control device 70. The light M emitted from the light source 40 passes through the lens unit 50 and is emitted toward the object A.

As the light M is emitted to the object A and is reflected by the object A, the light N including the reflected light R enters the bandpass filter 80. In the bandpass filter 80, the reflected light R is extracted from the light N, and the extracted reflected light R enters the lens unit 30. The reflected light R that has entered the lens unit 30 is condensed onto the sensor 60. The sensor 60 converts the condensed reflected light R into an electrical signal and transmits the electrical signal to the control device 70.

The control device 70 calculates the distance between each point of the object A and the LiDAR device 2 on the basis of the electrical signal from the sensor 60, according to a predetermined algorithm. The control device 70 may store data indicating the calculated distance into an internal memory or the like, or may transmit the data to an external device.

The LiDAR device 2 having the above configuration modulates the light M using the lens unit 50, and emits the modulated light M to the object A. Thus, the LiDAR device 2 can increase the amount of change in the phase of the light M by modulating the light M with the first meta-lens 31 and the second meta-lens 32.

Also, the LiDAR device 2 modulates the reflected light R using the lens unit 30. Thus, the LiDAR device 2 can increase the amount of change in the phase of the reflected light R by modulating the reflected light R with the first meta-lens 31 and the second meta-lens 32.

Further, the lens units 30 and 50 each prevent adhesion of dirt to the first meta-lens 31 and the second meta-lens 32, and can prevent degradation of the functions of the first meta-lens 31 and the second meta-lens 32. Accordingly, the LiDAR device 2 can prevent adhesion of dirt to the first nanostructures 311 and the second nanostructures 321 while using the meta-lenses for modulation of the light M and the reflected light R. Thus, the LiDAR device 2 can prevent degradation of the functions of the first meta-lens 31 and the second meta-lens 32.

Note that the bandpass filter 80 included in the LiDAR device 2 may be disposed between the lens unit 30 and the sensor 60. Further, the LiDAR device 2 does not necessarily include the bandpass filter 80. In this case, the sensor 60 may convert light having a wavelength in a predetermined range including the wavelength of the light M, into an electrical signal.

Furthermore, in the LiDAR device 2, the lens unit 50 or the lens unit 30 may be formed with a lens such as a convex lens.

The LiDAR device 2 may further include a lens in front of or behind the lens unit 30. Also, the LiDAR device 2 may further include a lens in front of or behind the lens unit 50.

Further, the LiDAR device 2 may measure the distance to the object A by scanning the light M. In this case, the light N including the reflected light R of the scanned light M may enter the bandpass filter 80.

### (First Modification)

Next, a first modification of the lens unit 30 is described. Note that the components that are same as or equivalent to those of the first embodiment are denoted by the same reference signs as those used in the first embodiment, and explanation thereof is not repeated herein unless otherwise specified. The present modification differs from the first embodiment in that the lens unit 30 further includes a meta-lens. FIG. 7 is a cross-sectional diagram schematically illustrating the lens unit 30 according to the present modification. FIG. 7 is a diagram schematically illustrating a vertical cross-section of the lens unit 30. As illustrated in FIG. 7, the lens unit 30 includes a first meta-lens 31, a second meta-lens 32, a cover unit 33, and a third meta-lens 34 as principal components.

The third meta-lens 34 is disposed at a predetermined distance from the first meta-lens 31 and the second meta-lens 32 in the space S2. The third meta-lens 34 modulates the phase of the light L from the light source 20. Here, the third meta-lens 34 is designed to narrow the divergence angle of the light L from the first meta-lens 31.

Also, the third meta-lens 34 includes a third entering surface 34a through which the light L emitted from the first emission surface 31b enters. The third entering surface 34a faces the first emission surface 31b. Further, the third meta-lens 34 includes a third emission surface 34b through which the light L having entered the third entering surface 34a is emitted. The third emission surface 34b faces the second entering surface 32a.

The third meta-lens 34 includes a substrate 340. The description of the substrate 340 is the same as the description of the substrate 310, and therefore, the description thereof is not made herein.

A plurality of third nanostructures 341 that modulate the phase of the light L is provided on the third emission surface 34b side of the substrate 340. Here, for the sake of visual clarity, only one third nanostructure 341 is denoted by the reference sign, and the reference signs for the other third nanostructures 341 are omitted. In the third meta-lens 34 of the present modification, the third nanostructures 341 are arranged over an entire surface of the substrate 340.

The description of the third nanostructures 341 is the same as the description of the first nanostructures 311, and therefore, is omitted herein. Further, the third nanostructures 341 may be the same in material or shape as the first nanostructures 311 or the second nanostructures 321, or may be different.

Furthermore, in any combination of a third nanostructure 341 and a second nanostructure 321 facing each other, the third nanostructure 341 and the second nanostructure 321 are separated by the distance d or longer. That is, the distance between the third nanostructure 341 and the second nanostructure 321 facing each other is at least twice the longest wavelength of the light L.

Also, each of the first nanostructures 311 and the third entering surface 34a are separated by the distance d. That is, the distance between each of the first nanostructures 311 and the third entering surface 34a is at least twice the longest wavelength of the light L.

In the lens unit 30 according to the first modification, the light L emitted from the first emission surface 31b of the first meta-lens 31 enters the third entering surface 34a of the third meta-lens 34. The light L that has entered the third entering surface 34a is modulated by the plurality of third nanostructures 341. The light L modulated by the plurality of third nanostructures 341 is emitted from the third emission surface 34b, and enters the second entering surface 32a of the second meta-lens 32. That is, the light L emitted from the first emission surface 31b enters the second entering surface 32a of the second meta-lens 32 via the third meta-lens 34.

The lens unit 30 having the above configuration includes the third meta-lens 34 between the first meta-lens 31 and the second meta-lens 32. In the lens unit 30, the light L from the light source 20 passes through the first meta-lens 31, the third meta-lens 34, and the second meta-lens 32. Accordingly, the light L from the light source 20 is also modulated by the third meta-lens 34. Thus, the lens unit 30 can increase the amount of change in the phase of the light L.

Also, the lens unit 30 includes the third meta-lens 34 in the space S2. Accordingly, the lens unit 30 can prevent contact of dirt such as dust from the outside with the third nanostructures 341 of the third meta-lens 34. Thus, the lens unit 30 can prevent adhesion of dirt to the third nanostructures 341, and prevent degradation of the functions of the third meta-lens 34.

### (Second Modification)

Next, a second modification of the lens unit 30 is described. Note that the components that are same as or equivalent to those of the first embodiment are denoted by the same reference signs as those used in the first embodiment, and explanation thereof is not repeated herein unless otherwise specified. The present modification differs from the first modification in the configuration of the third meta-lens 34.

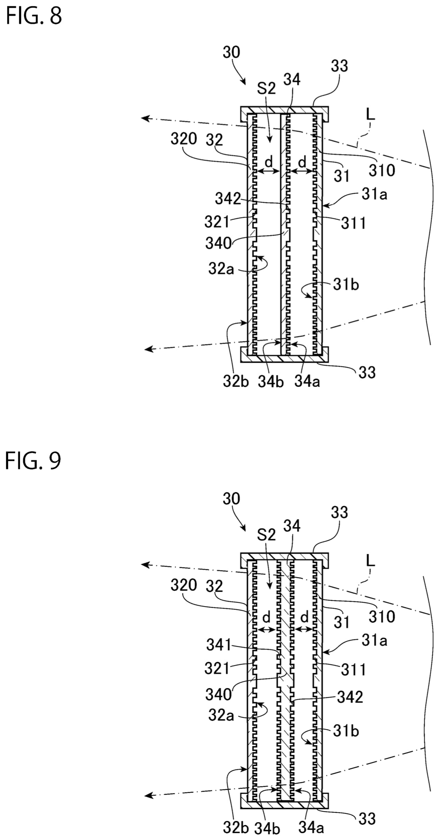

FIG. 8 is a cross-sectional diagram schematically illustrating the lens unit 30 according to the present modification. FIG. 8 is a diagram schematically illustrating a vertical cross-section of the lens unit 30.

As illustrated in FIG. 8, a plurality of third nanostructures 342 that modulate the phase of the light L is provided on the third emission surface 34b side of the substrate 340. Here, for the sake of visual clarity, only one third nanostructure 342 is denoted by the reference sign, and the reference signs for the other third nanostructures 342 are omitted. In the third meta-lens 34 of the present modification, the third nanostructures 342 are arranged over an entire surface of the substrate 340.

The third nanostructures 342 extend rearward, for example. The description of the other aspects of the third nanostructures 342 is the same as the description of those of the first nanostructures 311, and therefore, is omitted herein. Further, the third nanostructures 342 may be the same in material or shape as the first nanostructures 311, the second nanostructures 321, or the third nanostructures 341, or may be different.

Furthermore, in any combination of a third nanostructure 342 and a first nanostructure 311 facing each other, the third nanostructure 342 and the first nanostructure 311 are separated by the distance d or longer. That is, the distance between the third nanostructure 342 and the first nanostructure 311 facing each other is at least twice the longest wavelength of the light L.

Also, each of the second nanostructures 321 and the third emission surface 34b are separated from each other by the distance d. That is, the distance between each of the second nanostructures 321 and the third emission surface 34b is at least twice the longest wavelength of the light L.

In the lens unit 30 according to the second modification, the light L emitted from the first emission surface 31b of the first meta-lens 31 enters the third entering surface 34a of the third meta-lens 34. The light L that has entered the third entering surface 34a is modulated by the plurality of third nanostructures 342. The light L modulated by the plurality of third nanostructures 342 is emitted from the third emission surface 34b, and enters the second entering surface 32a of the second meta-lens 32. That is, the light L emitted from the first emission surface 31b enters the second entering surface 32a of the second meta-lens 32 via the third meta-lens 34.

### (Third Modification)

Next, a third modification of the lens unit 30 is described. Note that the components that are same as or equivalent to those of the first embodiment are denoted by the same reference signs as those used in the first embodiment, and explanation thereof is not repeated herein unless otherwise specified. The present modification differs from the first modification in the configuration of the third meta-lens 34. The lens unit 30 according to the present modification may be used in place of the lens unit 30 in the first or second embodiment. Further, in the second embodiment, the lens unit 30 does not necessarily include the cover unit 33. Also, the lens unit 30 according to the present modification may be used in place of at least one of the lens unit 30 or the lens unit 50 in the third embodiment.

FIG. 9 is a cross-sectional diagram schematically illustrating the lens unit 30 according to the present modification. FIG. 9 is a diagram schematically illustrating a vertical cross-section of the lens unit 30.

As illustrated in FIG. 9, a plurality of third nanostructures 341 is provided on the third emission surface 34b side of the third meta-lens 34. Here, for the sake of visual clarity, only one third nanostructure 341 is denoted by the reference sign, and the reference signs for the other third nanostructures 341 are omitted.

Also, a plurality of third nanostructures 342 is provided on the third entering surface 34a side of the third meta-lens 34. Here, for the sake of visual clarity, only one third nanostructure 342 is denoted by the reference sign, and the reference signs for the other third nanostructures 342 are omitted.

In the lens unit 30 according to the third modification, the light L emitted from the first emission surface 31b of the first meta-lens 31 enters the third entering surface 34a of the third meta-lens 34. The light L that has entered the third entering surface 34a is modulated by the plurality of third nanostructures 341 and 342. The light L modulated by the plurality of third nanostructures 341 and 342 is emitted from the third emission surface 34b, and enters the second entering surface 32a of the second meta-lens 32. That is, the light L emitted from the first emission surface 31b enters the second entering surface 32a of the second meta-lens 32 via the third meta-lens 34.

Although the present invention has been described by taking the above-described embodiments as examples, the present invention is not limited thereto.

For example, in the first and second embodiments, the vehicle headlight 1 is a headlight, but is not limited to any particular one. For example, the vehicle headlight 1 may irradiate an object to be irradiated, such as a road surface, with light that forms an image. Further, in a case where the vehicle headlight 1 irradiates an object to be irradiated, such as a road surface, with light that forms an image, the direction of the light to be emitted from the vehicle headlight 1 and the position at which the vehicle headlight 1 is attached to the vehicle are not limited to any particular ones. Also, the color of the light to be emitted from the vehicle headlight 1 is not limited to any specific color.

Also, in the first and second embodiments, the lens unit 30 that narrows the divergence angle of the light L from the light source 20 has been described as an example. However, the lens unit 30 may be designed to widen the divergence angle of the light L from the light source 20.

Further, in the first, second, and third embodiments, the substrate 310 and the substrate 320 formed on a plane have been described as examples. However, the substrate 310 and the substrate 320 may be in a curved state. However, to make the lens unit 30 thinner, the substrate 310 and the substrate 320 are preferably in a planar form.

Further, in the first, second, and third modifications, the lens unit 30 in which the third meta-lens 34 is disposed between the first meta-lens 31 and the second meta-lens 32 has been described as an example. However, the lens unit 30 may include a plurality of meta-lenses between the first meta-lens 31 and the second meta-lens 32. Alternatively, the lens unit 30 may include a convex lens or a concave lens between the first meta-lens 31 and the second meta-lens 32.

Further, the lens unit 30 according to the first, second, or third modification may be used in place of the lens unit 30 in the first or second embodiment. Furthermore, in a case where the lens unit 30 according to the first, second, or third modification is used in the second embodiment, the lens unit 30 does not necessarily include the cover unit 33. Further, the lens unit 30 according to the first, second, or third modification may be used in place of at least one of the lens unit 30 or the lens unit 50 in the third embodiment.

According to the present invention, a lens unit, a lamp, and a LiDAR device that can prevent degradation of the functions of meta-lenses are provided, and the lens unit, the lamp, and the LiDAR device can be used in the fields of vehicle headlights for automobiles and the like, measuring devices for measuring distance, and the like.

## Claims

1. A lens unit comprising:
a first meta-lens that has a first entering surface through which light enters, and a first emission surface through which the light that has entered the first entering surface is emitted, and includes a plurality of first nanostructures provided on a side of the first emission surface, the first nanostructures being configured to modulate a phase of the light; and
a second meta-lens that has a second entering surface that faces the first emission surface and through which the light emitted from the first emission surface enters, and a second emission surface through which the light that has entered the second entering surface is emitted, and includes a plurality of second nanostructures provided on a side of the second entering surface, the second nanostructures being configured to modulate the phase of the light.

2. The lens unit according to claim 1, further comprising
a cover unit that surrounds at least part of a space formed between the first meta-lens and the second meta-lens.

3. The lens unit according to claim 1, wherein
each distance between the first nanostructures and the second nanostructures facing each other is at least twice a wavelength of the light.

4. The lens unit according to claim 1, further comprising
a third meta-lens that is disposed between the first meta-lens and the second meta-lens, has a third entering surface that faces the first emission surface and through which the light entering from the first emission surface enters, and a third emission surface through which the light having entered the third entering surface is emitted, and includes a plurality of third nanostructures provided on at least one of a side of the third entering surface or a side of the third emission surface, the third nanostructures being configured to modulate the phase of the light, wherein
the light emitted from the first emission surface enters the second entering surface via the third meta-lens.

5. A lamp comprising:
the lens unit according to any one of claims 1 to 4; and
a light source that emits the light.

6. The lamp according to claim 5, further comprising
a housing that has an outer cover that transmits the light, and surrounds the light source, wherein
the lens unit is at least part of the outer cover.

7. A LiDAR device comprising:
a light source that emits light to an object;
the lens unit according to any one of claims 1 to 4; and
a sensor that receives reflected light of the light reflected by the object, wherein
the lens unit modulates a phase of at least one of the light or the reflected light.
